(19) Europäisches Patentamt

European Patent Office

Office européen des brevets

(11) **EP 1 590 404 B1**

(12) **FASCICULE DE BREVET EUROPEEN**

(45) Date de publication et mention
de la délivrance du brevet:
**10.05.2006 Bulletin 2006/19**

(21) Numéro de dépôt: **04705432.5**

(22) Date de dépôt: **27.01.2004**

(51) Int Cl.:
*C08L 67/08* *(2006.01)*    *C09D 167/08* *(2006.01)*

(86) Numéro de dépôt international:
**PCT/FR2004/000185**

(87) Numéro de publication internationale:
**WO 2004/069933 (19.08.2004 Gazette 2004/34)**

(54) **DISPERSION AQUEUSE DE RESINE ALKYDE TRAITEE PAR UN AGENT OXYDANT, A SECHAGE AMELIORE**

WÄSSRIGE DISPERSION VON ALKYDHARZ BEHANDELT MIT EINEM OXIDATIONSMITTEL, MIT VERBESSERTER TROCKNUNG

AQUEOUS DISPERSION OF ALKYDE RESIN WHICH IS TREATED WITH AN OXIDIZING AGENT AND WHICH HAS IMPROVED DRYING PROPERTIES

(84) Etats contractants désignés:
**AT BE BG CH CY CZ DE DK EE ES FI FR GB GR HU IE IT LI LU MC NL PT RO SE SI SK TR**

(30) Priorité: **31.01.2003 FR 0301130**

(43) Date de publication de la demande:
**02.11.2005 Bulletin 2005/44**

(73) Titulaire: **Cray Valley S.A.**
**92400 Courbevoie (FR)**

(72) Inventeurs:
• **COGORDON, Frank**
**F-60100 Creil (FR)**

• **RODRIGUEZ, Ivan**
**F-60290 Cauffry (FR)**

(74) Mandataire: **Killis, Andréas**
**Cray Valley**
**Patents Department**
**Centre De Recherche De L'Oise. BP 22**
**60550 Verneuil en Halatte (FR)**

(56) Documents cités:
**US-A- 2 981 703          US-A- 2 981 710**
**US-A- 4 419 139**

## Description

La présente invention concerne une dispersion aqueuse de résine alkyde à base d'acides gras à insaturation conjuguée, traitée par agent oxydant et ayant des performances spécifiques, en particulier au séchage, un procédé spécifique d'obtention et son utilisation comme liant dans des compositions aqueuses de revêtements décoratifs ou industriels, à taux réduit d'agent siccatif ou sans agent siccatif.

Le séchage d'un film de peinture formulée à partir d'une résine alkyde s'opère par auto-oxydation avec l'oxygène de l'air (siccativation). Un des objectifs de cette invention est l'accélération du séchage des films de peinture formulée à base d'une résine alkyde spécifique par traitement particulier à l'aide d'agents oxydants, avant et/ou pendant et/ou après la mise en dispersion aqueuse.

US 3 222 308 décrit un pré traitement oxydant par l'oxygène de l'air de résines alkydes en milieu solvant, avec des temps de traitement et des temps de séchage résultant trop longs, même pour les températures de traitement élevées. D'autre part, ce document précise que le risque de gélification limite l'utilisation de températures plus élevées. Cette gélification est bien confirmée sous les conditions décrites dans US 3 222 308 sur une résine alkyde à insaturation conjuguée, ce qui exclut la possibilité d'extrapolation de l'enseignement de US 3 222 308 à la solution du problème de la présente invention.

US 2 981 703 décrit des résines alkydes en milieu solvant, traitées par $H_2O_2$ pour leur utilisation comme plastifiants dans des vernis aqueux à base d'aminoplastes, afin d'améliorer leur compatibilité avec les autres composants.

Le problème technique que la présente invention a résolu, par rapport à l'art antérieur, réside dans un compromis de performances non évident par rapport à l'état de l'art, comme un séchage significativement amélioré, avec comme conséquence, la possibilité de réduire significativement et de préférence d'éliminer les agents siccatifs, sans effets négatifs sur la stabilité et les autres performances de la dispersion aqueuse de la résine alkyde à insaturation conjuguée spécifique. La spécificité du traitement oxydant et de la résine traitée permet de réduire significativement et de préférence d'éliminer la nécessité de présence d'agent siccatif tout en évitant la déstabilisation de la dispersion ou la gélification de la résine et ceci malgré la présence d'insaturation conjuguée. En effet, les performances de la résine traitée selon les conditions décrites dans US 2 981 703 sont démontrées insuffisantes, en particulier au séchage, et d'autre part, leur extrapolation à une résine selon la présente invention, conduit à une gélification. Par conséquent, l'enseignement technique de l'état de l'art ne peut s'appliquer au problème de la présente invention.

Par un choix spécifique des conditions de procédé appliquées à la résine spécifique à fort taux d'insaturation conjuguée, la présente invention remédie aux inconvénients liés au problème technique exposé et permet l'obtention de dispersions aqueuses de résines alkydes ayant des performances de séchage significativement améliorées. L'amélioration s'exprime, en particulier, en termes de temps de séchage et des performances de stockage (stabilité dans le temps) ou d'application et de diluabilité dans l'eau (stabilité par dilution dans l'eau) et de respect des règles environnementales avec des taux réduits de composés organiques volatils ou de composés de métaux lourds utilisés comme agents siccatifs, tout en maintenant au moins constantes d'autres performances (ex. : brillant, jaunissement) de ces revêtements par rapport à l'absence de traitement et tout en évitant le problème de gélification de la résine alkyde traitée ou celui du risque de la floculation de la dispersion par la réticulation interparticulaire, risque plus particulier pour des résines ayant un taux significatif en acide gras insaturé conjugué. Il s'agit d'un compromis complexe et difficile de plusieurs performances d'application et d'usage que l'invention a réussi à obtenir par les moyens spécifiques utilisés de la résine et du procédé.

Un premier objet de la présente invention concerne une dispersion aqueuse d'au moins une résine alkyde soumise à un traitement oxydant, avant et/ou pendant et/ou après mise en dispersion aqueuse par un agent oxydant spécifique et à une température spécifique, qui est fonction de la réalisation du traitement par rapport à l'étape de mise en dispersion aqueuse.

Un second objet de l'invention concerne un procédé de préparation de cette dispersion aqueuse comprenant une étape de traitement par au moins un agent oxydant spécifique, et une étape de dispersion aqueuse de la résine alkyde avant ou pendant ou après le traitement oxydant.

Un autre objet de l'invention est une dispersion de résine alkyde, pouvant être obtenue selon le procédé spécifique de l'invention.

Fait également partie de l'invention, une composition aqueuse de revêtement parmi les peintures ou vernis aqueux décoratifs ou industriels comprenant comme liant au moins une dispersion aqueuse de résine alkyde selon l'invention et plus préférentiellement sans agent siccatif.

Un autre objet de l'invention est l'utilisation d'une dispersion aqueuse selon l'invention dans les revêtements décoratifs ou industriels aqueux, y compris anti corrosion, pour substrats sélectionnés parmi : bois, métal, plastique, béton, plâtre, céramique, brique, composite.

Finalement, un dernier objet concerne des substrats revêtus avec au moins une des compositions de revêtements telles que définies selon l'invention.

Le premier objet de la présente invention concerne une dispersion aqueuse comprenant au moins une résine alkyde obtenue à partir d'au moins un acide gras insaturé conjugué représentant en poids au moins 5% de ladite résine, ladite résine étant traitée avant et/ou pendant et/ou après la mise en dispersion aqueuse par au moins un agent oxydant sélectionné parmi : les hydroperoxydes y compris $H_2O_2$, les peroxydes, l'oxygène singulet et la température de traitement oxydant se situant : i) de 50 à 150°C, de préférence de 50 à 140°C, et plus préférentiellement de 70 à 120°C, et encore plus préférentiellement de 70 à moins de 100°C, lorsqu'il a lieu avant la mise en dispersion et ii) de l'ambiante à moins de 100°C, de préférence de 50 à 90°C lorsqu'il a lieu après la mise en dispersion et iii) de 50 à moins de 100°C et de préférence de 50 à 90°C lorsque le traitement a lieu pendant l'étape de dispersion et en ce que la taille moyenne des particules est de 50 à 500 nm et que le taux d'extrait sec est de 30 à 70%.

La durée du traitement oxydant peut varier, en fonction de la nature et du taux d'agent oxydant et de la température de traitement, de quelques minutes, comme 5 minutes (à température et à taux d'agent oxydant les plus élevés) à quelques heures, comme 5 heures (à taux et à température les plus faibles).

Selon un mode plus préféré de la dispersion selon l'invention, le traitement oxydant peut avoir lieu en l'absence de tout agent siccatif ou de tout agent pouvant jouer un rôle équivalent d'agent réducteur, qui peut faciliter la décomposition de l'agent oxydant tel que l'hydroperoxyde ou le peroxyde.

L'agent oxydant est plus préférentiellement sélectionné parmi les hydroperoxydes de formule générale ROOH avec R choisi parmi H, alkyles, aralkyles et avec un taux en poids allant de 0,05 à 5% par rapport au total de ladite résine. Dans ce cas, le temps de traitement peut varier de 5 minutes à 5 heures et de préférence à 2 heures.

Plus particulièrement, l'hydroperoxyde peut être choisi parmi : $H_2O_2$, hydroperoxyde de cumyle ou de t-butyle et plus préférentiellement $H_2O_2$ aqueux. Dans ce dernier cas, $H_2O_2$ est sous forme de solution aqueuse avec un taux en poids de $H_2O_2$ allant de 15 à 60% et plus particulièrement de 25 à 45%. Le taux en poids de $H_2O_2$, exprimé en % $H_2O_2$ pur/résine, peut varier dans une plage allant de 0,05 à 5%, de préférence de 0,05 à 2%, et plus préférentiellement de 0,05 à 1,5%, et encore plus préférentiellement de 0,1 à 1%. Dans le cas de $H_2O_2$, la durée de traitement peut varier de 5 minutes à 2 heures et de préférence de 10 minutes à 1 heure.

La dispersion aqueuse selon l'invention peut avoir préférentiellement un taux en poids d'acide gras insaturé conjugué allant de 10 à 60%, de préférence de 15 à 50%, et plus préférentiellement de 20 à 50%, par rapport à ladite résine, et un taux en poids total d'acide gras de 30 à 70% en poids, de préférence de 30 à 60%, par rapport à ladite résine, avec un taux en poids d'acide gras insaturé conjugué sur total d'acide gras allant de 15 à 85% et de préférence de 25.à 70%, et plus préférentiellement de 35 à 70%.

La dispersion aqueuse de l'invention a une taille moyenne de particules allant de 50 à 500 nm et de préférence de 100 à 300 nm, un extrait sec allant de 30 à 70%, et de préférence de 40 à 60%.

La résine alkyde selon l'invention peut avoir les caractéristiques supplémentaires suivantes avant traitement oxydant : une masse moléculaire moyenne en poids Mw allant de 10000 à 500000 et de préférence de 20000 à 300000 et un indice d'acide ne dépassant pas 70, de préférence de 5 à 60, et plus préférentiellement de 5 à 50, un indice de OH allant de 20 à 150, de préférence de 30 à 100, et une fonctionnalité moyenne f allant de 1,9 à 2,1. Cette fonctionnalité moyenne est définie comme étant égale à (cf. The Chemistry of Organic Film Formers, édition John Wiley & Sons, p. 80 - D.H. Solomon) :

$$f = 2 \, \Sigma_i \, n_i f_i \, / \, M$$

avec ni et fi étant respectivement le nombre de moles et fonctionnalité du (poly)acide et M le nombre de moles total.

La résine alkyde, avant traitement oxydant, peut être obtenue par tout procédé conventionnel de fabrication de résines alkydes, soit par procédé « fusion » soit par procédé « solvant » comme décrit dans Kirk-Othmer Encyclopaedia of Chemical Technology (édition Wiley-Interscience du 14/11/2000) Vol 2, «Alkyd resins» pp 12-14. Une des caractéristiques essentielles de cette résine alkyde est la présence dans celle-ci d'au moins un acide gras insaturé conjugué, à un taux en poids d'au moins 5%, de préférence d'au moins 10%, et plus particulièrement de 10 à 60%, et plus préférentiellement de 15 à 50%, et encore plus préférentiellement de 20 à 50%. Le taux total en poids de l'acide gras (y compris l'acide gras insaturé conjugué) de la résine varie de 30 à 70%, de préférence de 30 à 60%. Comme acides gras insaturés conjugués, on peut définir les acides gras insaturés contenant au moins une insaturation diénique conjuguée par chaîne grasse de type -CH=CH-CH=CH-. Cette insaturation diénique conjuguée peut exister naturellement dans des acides gras insaturés tels que l'huile d'abrasine (tung oil) ou huile d'oiticica ou par traitement spécifique comme l'isomérisation d'acides gras insaturés (diéniques non conjugués ou insaturés en général). Des exemples convenables à l'invention sont les produits de l'isomérisation d'acides gras insaturés non conjugués comme : l'acide linoléique ou linolénique ou l'acide gras de tournesol, l'acide gras de lin, l'acide gras de soja ou les produits de déshydratation de l'acide gras de ricin. Comme autres acides gras conjugués disponibles commercialement qui peuvent convenir pour les besoins de l'invention, avec un taux important en acides gras conjugués, on peut citer le Nouracid® DE704, DE656, DE655, DE554, DE503, DZ453, DE402 (Acide gras de ricin déshydraté - Akzo-Nobel), le Nouracid® HE456, HE305, HE304 (Acide gras de tournesol isomérisé - Akzo-Nobel), le Nouracid® LE805 (Acide gras de lin isomérisé - Akzo-Nobel), le Prifac® 7967, 7968 (acide gras végétal isomérisé - Uniqema), le Dedico® 5981, 5983 (Acide gras de ricin déshydraté - Uniqema), l'Isomergin® SK, SY, SF (Acide gras végétal isomérisé - Hobum Harburger Fettchemie Brinckman & Mergell GmbH), le Pamolyn® 200, 300, 380 (Acide linoléique isomérisé - Eastman).

Parmi les acides gras insaturés conjugués préférés, on peut citer : Isomergin® Acide SF, Nouracid® HE305, Nouracid® DE656, Dedico® 5981.

Le composant acide, dont est obtenue la résine alkyde, comprend d'autre part, en plus de l'acide gras insaturé conjugué, au moins un autre acide gras insaturé non conjugué, au moins un acide gras saturé, au moins un polyacide carboxylique ou dérivé d'anhydride correspondant et au moins un monoacide carboxylique non gras, tel que choisi parmi les acides : benzoïque, butanoïque, p-tert-butyl benzoïque, caproïque, caprylique, caprique, propanoïque, pentanoïque, abietique, crotonique. Parmi les monoacides gras, on peut citer les acides gras de ricin, de coco, de coton, de ricin déshydraté, de soja, de tall, acides 2-éthyl hexanoïque, linoléique, linolénique, oléique, pelargonique, rosine.

Le monoacide carboxylique a un rôle d'agent limitateur et de terminaison de la chaîne de résine alkyde, obtenue par polycondensation du composant acide et du composant polyol. Le polyacide carboxylique ou anhydride correspondant a de préférence une fonctionnalité de 2 à 4 avec des fonctionnalités moyennes intermédiaires pouvant être obtenues par mélange d'au moins deux polyacides. Parmi ces polyacides de fonctionnalité 2, on peut citer les acides ou anhydrides suivants : adipique, azélaique, fumarique, isophtalique, maléique, phtalique, succinique, sébacique, diglycolique. Exemple de polyacide ou anhydride de fonctionnalité 3 : acide citrique, acide et anhydride trimellitique et de fonctionnalité 4 : anhydride pyromellitique.

Compte tenu de l'origine naturelle des acides gras insaturés utilisés en général dans les résines alkydes, il s'agit en fait de mélanges comprenant acides gras saturés, insaturés non conjugués et selon l'invention des acides gras diéniques conjugués.

Le composant polyol est composé de polyols couramment utilisés dans les résines alkydes et peut comprendre au moins un polyol de fonctionnalité d'au moins deux jusqu'à 6, comme : éthylène glycol, polyéthylène glycol (Mw variant de 300 à 6000), propylène glycol, 1,3-butylène diol, pentane diol, neopentyl glycol, hexane diol, diéthylène glycol, dipropylène glycol, triéthylène glycol, glycérol, triméthylol propane, triméthylol éthane, pentaérythritol ou le dipentaérythritol, sorbitol, méthyl glucoside et éventuellement un monoalcool tel que le butanol, pentanol, hexanol, isooctanol, éthoxyéthanol, butyl carbitol. Le monoalcool peut jouer, comme le monoacide du composant acide, le rôle de limitateur et terminateur de chaîne.

D'autre part, la résine alkyde utilisable pour la dispersion selon l'invention, peut être ou comprendre, en dehors d'une alkyde telle que définie ci-dessus, une résine alkyde modifiée chimiquement choisie parmi : alkydes siliconées, alkydes uréthanes, hybrides alkydes-acryliques. La dispersion d'alkyde comme objet du traitement oxydant (traitement après dispersion aqueuse) peut aussi être un mélange d'au moins une dispersion aqueuse d'au moins une résine alkyde telle que définie avant traitement, avec une autre dispersion aqueuse de résine alkyde ou avec une émulsion de type acrylique, styrène acrylique ou vinylique compatible ou avec une dispersion aqueuse de polyuréthane ou d'un autre polymère compatible avec la résine alkyde non traitée, telle que définie ci-dessus.

Concernant le traitement oxydant, la température de traitement est adaptée au milieu à traiter (la résine avant ou pendant ou après dispersion aqueuse) de manière à atteindre une viscosité convenable. Ainsi, la température de traitement oxydant est :

- de 50 à 150°C, de préférence de 50 à 140°C, et plus préférentiellement de 70 à 120°C, et encore plus préférentiellement de 70 à moins de 100°C, lorsque le traitement est réalisé sur la résine avant dispersion aqueuse et après l'étape finale de préparation de la résine alkyde de base, ou
- de l'ambiante à moins de 100°C et de préférence de 50 à 90°C lorsque le traitement a lieu sur la dispersion aqueuse de résine (après mise en dispersion)
- de 50 à moins de 100°C, de préférence de 50 à 90°C, lorsque le traitement a lieu pendant l'étape de mise en dispersion aqueuse et plus précisément avant l'inversion de phase.

Parmi les agents oxydants utilisables, les hydroperoxydes et peroxydes sont ajoutés dans le milieu du traitement lentement et sous forme de solution. L'oxygène singulet, autre agent oxydant possible, est introduit dans le milieu à traiter par préparation in situ par réaction d'une solution aqueuse de $H_2O_2$ avec l'hypochlorite de sodium (NaOCl).

L'agent oxydant préféré pour le traitement oxydant est $H_2O_2$ en solution aqueuse, à une concentration allant de 15 à 60% et de préférence de 25 à 45% en poids par rapport à la solution aqueuse, avec un taux en poids de 0,05 à 5%, de préférence de 0,05 à 2%, et plus préférentiellement de 0,05 à 1,5%, et encore plus préférentiellement de 0,1 à 1%, par rapport à la résine alkyde, en considérant ici le poids total de résine alkyde.

Concernant le traitement oxydant de la dispersion aqueuse, quatre options existent, en relation avec la situation de cette étape dans le procédé de réalisation de la dispersion aqueuse de l'invention : i) après mise en dispersion, ii) avant l'étape de mise en dispersion, iii) pendant la mise en dispersion et plus précisément avant l'étape d'inversion de phase, et iv) selon combinaison d'au moins deux options parmi les trois options précédentes i), ii) et iii).

Selon la première option i), la dispersion aqueuse est obtenue par traitement oxydant après l'étape de mise en dispersion aqueuse de ladite résine alkyde, à une température de traitement inférieure à 100°C et de préférence allant de l'ambiante à moins de 100°C et plus préférentiellement de 50 à 90°C.

Selon la deuxième option ii), la dispersion aqueuse est obtenue par un traitement oxydant ayant lieu avant la mise en dispersion, c'est à dire directement sur la résine alkyde, à une température allant de 50 à 150°C, de préférence de 50 à 140°C, et plus préférentiellement de 70 à 120°C, et encore plus préférentiellement de 70 à moins de 100°C.

Selon la troisième option iii), la dispersion aqueuse est obtenue par un traitement oxydant ayant lieu pendant l'étape de la mise en dispersion et plus précisément avant l'étape d'inversion de phase, avec ledit traitement oxydant ayant lieu à une température allant de 50 à moins de 100°C et de préférence de 50 à 90°C.

Selon la quatrième option iv), la dispersion aqueuse est obtenue par un traitement oxydant selon la combinaison d'au moins deux options parmi les trois options précédentes i), ii), iii). Selon cette option combinatoire iv), le traitement oxydant peut avoir lieu soit avant et après l'étape de mise en dispersion aqueuse, soit avant et pendant et après cette étape, soit avant et pendant cette étape ou soit pendant et après cette étape de dispersion.

L'agent oxydant préféré pour les quatre options de traitement est toujours $H_2O_2$ en solution aqueuse (15-60%) à un taux de $H_2O_2$ allant de 0,05 à 5%, de préférence de 0,05 à 2%, et plus préférentiellement de 0,05 à 1,5%, et encore plus préférentiellement de 0,1 à 1%, en poids par rapport à la résine alkyde.

L'étape de mise en dispersion aqueuse selon l'invention peut, pour un indice d'acide d'au moins 40 mg KOH/g résine, être obtenue par autoémulsification de la résine alkyde, après neutralisation au moins partielle de fonctions carboxyles de la résine alkyde. Pour un indice d'acide très inférieur à 40 mg KOH/g résine, cette étape d'autoémulsification peut être combinée avec, ou de préférence être remplacée par, une étape de dispersion en présence d'au moins un tensioactif. Ce tensioactif peut être sélectionné parmi les classes de tensioactifs ioniques (dans ce cas de préférence anionique), et/ou non ioniques et/ou mixtes (comportant dans la même molécule une structure non ionique et anionique). Le tensioactif préféré est composé d'au moins un tensioactif sélectionné dans la classe de tensioactif non ionique, éventuellement en présence d'un tensioactif anionique. La présence du tensioactif améliore la stabilité des particules lors du traitement (s'il a lieu pendant et/ou après dispersion) et lors du stockage et usage de la dispersion aqueuse finale. Les tensioactifs sont ajoutés de préférence avant le traitement oxydant, afin d'améliorer l'homogénéité du mélange réactionnel. Un critère de sélection du ou des tensioactifs utilisés est l'indice HLB (Hydrophilic Lipophilic Balance) représentant le rapport entre le caractère hydrophile et hydrophobe du tensioactif. Le HLB peut être choisi en fonction du taux en poids d'acide gras (TAG) de la résine alkyde. Selon ce choix, le HLB du tensioactif choisi varie inversement par rapport à la variation du TAG.

Parmi les tensioactifs anioniques convenables, on peut citer les sels de sodium, lithium, potassium, ammonium ou de magnésium dérivés des alkyl éthers sulfates avec alkyl variant de $C_8$ à $C_{12}$, ou des alkyl sulfates en $C_{12}$, des esters alkyl phosphates ou les dialkyl sulfosuccinates. Les tensioactifs anioniques sont de préférence utilisés avec au moins un tensioactif non ionique. Comme exemple de tensioactifs mixtes, on peut citer les sulfonates d'alkyl phénol alkoxylés. Les tensioactifs non ioniques peuvent être utilisés seuls mais de préférence en combinaison avec un tensioactif anionique. Comme exemples préférés de tensioactifs non ioniques convenables, on peut citer : les alcools gras en $C_{12}$-$C_{18}$ éthoxylés (2 à 35 EO), alcool gras iso $C_{10}$ éthoxylé (2-40 EO), alcools gras monobranché éthoxylé en $C_{10}$-$C_{18}$ (2-40 EO), esters de sorbitol en $C_{18}$, esters de sorbitol éthoxylé (5-20 motifs EO), ou acides gras en $C_{12}$-$C_{18}$ éthoxylés (7-100 EO), huile de ricin éthoxylée (30-40 EO), huile de ricin hydrogénée éthoxylée (7-60 EO), esters gras comme : palmitate de glycérol, stéarate de glycérol, stéarate d'éthylène glycol, stéarate de diéthylène glycol, stéarate de propylène glycol, stéarate de polyéthylène glycol 200 ou ester gras éthoxylé (2-15 EO) en $C_{18}$.

La dispersion aqueuse préférée comprend au moins un tensioactif non ionique éventuellement combiné avec au moins un tensioactif anionique, à un taux global en poids allant de 5 à 15% de préférence de 7 à 12% par rapport à ladite résine alkyde, et dans le cas de présence de tensioactifs anioniques, avec un rapport en poids, préféré, ionique sur non ionique allant de 25/75 à 50/50.

La dispersion aqueuse selon l'invention peut comprendre au moins un autre polymère ou au moins une autre résine additionnée après la mise en dispersion, ladite addition étant réalisée par simple mélange avec au moins une autre émulsion de polymère compatible, tel qu'acrylique ou styrène-acrylique ou vinylique ou avec au moins une dispersion aqueuse de polyuréthane compatible ou avec au moins une dispersion aqueuse compatible d'au moins un copolymère d'acide (méth)acrylique ou d'au moins un copolymère d'anhydride maléique, ces copolymères pouvant être au moins partiellement estérifiés (greffés) par des alcools gras qui peuvent comprendre des insaturations siccatives.

La dispersion aqueuse selon l'invention peut s'obtenir également par mélange d'au moins deux dispersions après traitement, telles que définies ci-dessus selon l'invention ou par mélange d'au moins une dispersion selon l'invention avec au moins une autre dispersion aqueuse de résine alkyde non traitée.

Le deuxième objet de l'invention concerne un procédé de préparation d'une dispersion aqueuse définie selon l'invention qui comprend au moins les étapes suivantes :

a) traitement oxydant avant et/ou pendant et/ou après l'étape de mise en dispersion d'au moins une résine alkyde, ayant un taux en poids d'acide gras insaturé conjugué d'au moins 5% par rapport au total de résine alkyde, par au moins un agent oxydant sélectionné parmi : les hydroperoxydes y compris $H_2O_2$, les peroxydes, l'oxygène singulet, et à une température allant :

i) de l'ambiante à moins de 100°C et de préférence de 50 à 90°C, lorsque ledit traitement oxydant a lieu après l'étape de mise en dispersion aqueuse et

ii) de 50 à 150°C, de préférence de 50 à 140°C, et plus préférentiellement de 70 à 120°C, et encore plus préférentiellement de 70 à moins de 100°C, lorsque ledit traitement oxydant a lieu avant l'étape de mise en dispersion aqueuse

iii) de 50 à moins de 100°C et de préférence de 50 à 90°C, lorsque ledit traitement a lieu pendant l'étape de mise en dispersion aqueuse et plus précisément avant l'étape d'inversion de phase

b) dispersion aqueuse de ladite résine alkyde avant ou pendant ou après traitement oxydant.

Selon un mode préféré, le taux en poids d'acide gras insaturé conjugué par rapport au total de ladite résine alkyde est d'au moins 10% en poids et l'agent oxydant est sélectionné parmi : les hydroperoxydes de formule générale ROOH avec R choisi parmi H, alkyles, aralkyles et avec un taux en poids allant de 0,05 à 5%, de préférence de 0,05 à 2%, et plus préférentiellement de 0,05 à 1,5%, et encore plus préférentiellement de 0,1 à 1%, par rapport au total de ladite résine. Selon un mode plus particulier de réalisation de ce procédé, le taux en poids d'acide gras insaturé conjugué est de 10 à 60%, de préférence de 15 à 50%, et encore plus préférentiellement de 20 à 50%, et le taux total en poids d'acide gras est de 30 à 70%, et encore plus préférentiellement de 30 à 60%, par rapport à ladite résine avec le taux en poids d'acide gras insaturé conjugué sur le total d'acide gras pouvant varier de 15 à 85%, de préférence de 25 à 70%, et encore plus préférentiellement de 35 à 70%.

Les caractéristiques supplémentaires préférées suivantes peuvent être associées à la dispersion aqueuse obtenue par ce procédé : la dispersion a une taille moyenne de particules allant de 50 à 500 nm et de préférence de 100 à 300 nm avec un taux d'extrait sec allant de 30 à 70%, de préférence de 40 à 60%. Selon un mode de réalisation préféré, l'étape du traitement oxydant est réalisée à l'aide d'une solution aqueuse de $H_2O_2$ de 15 à 60% et de préférence de 25 à 45% en $H_2O_2$. La durée du traitement oxydant peut varier en fonction du taux d'agent oxydant et de la température du traitement et peut aller de 5 minutes à 5 heures. Préférentiellement, dans le cas de $H_2O_2$, cette durée peut varier de 5 minutes à 2 heures et plus préférentiellement de 10 minutes à 1 heure.

Une variante de ce procédé comprend une étape de neutralisation qui peut être antérieure ou postérieure à celle du traitement oxydant. L'étape de la neutralisation se situe toujours avant celle de la mise en dispersion.

Selon une autre variante de ce procédé, l'étape de dispersion aqueuse de la résine alkyde est réalisée après neutralisation au moins partielle des fonctions carboxyles de la résine alkyde. Selon un autre mode, la neutralisation peut avoir lieu après le traitement oxydant et avant l'étape de mise en dispersion aqueuse. Un ajustement de pH est possible après l'étape de mise en dispersion afin de répondre aux spécifications particulières exigées par les formulations d'application. L'étape de neutralisation est réalisée par un agent de neutralisation qui peut être sélectionné parmi : hydroxyde de métal alcalin tel que LiOH, KOH, NaOH, amines telles que l'ammoniaque, la triéthylamine, la diéthanolamine, l'amino méthyl propanol.

Le procédé de l'invention peut comprendre une étape d'autoémulsification, située après l'étape de neutralisation au moins partielle des groupements carboxy de la résine alkyde, en particulier si celle-ci a un indice d'acide d'au moins 40. Pour un indice d'acide très inférieur à 40 mg KOH/g résine, cette étape d'autoémulsification peut être combinée avec, ou de préférence être remplacée par, une étape de dispersion en présence d'au moins un tensioactif. De préférence, l'étape de dispersion selon ce procédé est réalisée en présence d'au moins un tensioactif sélectionné parmi les tensioactifs ioniques, de préférence anioniques et/ou non ioniques ou mixtes, comme définis ci-dessus.

Selon un premier mode de réalisation de l'étape de traitement, celle-ci a lieu, à une température allant de l'ambiante à moins de 100°C, de préférence 50 à 90°C, après la mise en dispersion aqueuse et après une étape de neutralisation de la résine alkyde laquelle a lieu avant l'étape de la mise en dispersion aqueuse. Un ajustement anticipé de pH est souhaité avant l'addition de $H_2O_2$ dans la dispersion afin de compenser la relative baisse de pH résultant de cette addition et ceci afin d'assurer une meilleure stabilité à la dispersion.

Selon un deuxième mode de réalisation de l'étape du traitement oxydant, celui-ci a lieu directement sur la résine alkyde, avant l'étape de mise en dispersion aqueuse et à une température allant de 50 à 150°C, de préférence 50 à 140°C, et plus préférentiellement de 70 à 120°C, et encore plus préférentiellement de 70 à moins de 100°C. Par définition, cette étape a lieu avant l'étape de la mise en dispersion aqueuse et de préférence avant une étape de neutralisation et après l'étape finale de préparation de ladite résine alkyde.

Un troisième mode de réalisation du procédé par rapport au traitement oxydant consiste à réaliser ce traitement pendant l'étape de mise en dispersion et plus précisément avant l'étape d'inversion de phase, à une température de traitement allant de 50 à moins de 100°C et de préférence de 50 à 90°C.

Un quatrième mode de réalisation du procédé par rapport au traitement oxydant consiste à réaliser une combinaison d'au moins deux modes de réalisation parmi les trois précédents décrits. Cela signifie selon ce quatrième mode de réalisation du procédé que le traitement oxydant peut avoir lieu par rapport à l'étape de mise en dispersion : soit avant et après, soit avant et pendant, soit pendant et après, soit avant et pendant et après.

L'étape de la mise en dispersion aqueuse est réalisée en présence d'un tensioactif et selon un procédé d'inversion de phase (cf. Multiphase Science and Technology, Vol. 12, pp. 51-116, 2000 - Phase Inversion and associated phenomena - L.Y. Yeo, O. K. Matar, E.S. Perez de Ortiz, G. F. Hewitt) et en utilisant comme moyen de dispersion soit un disperseur mécanique, à effet d'homogénéisation efficace, soit un appareil sonificateur à ultrasons.

Selon une variante, le procédé de préparation de la dispersion aqueuse selon l'invention, peut comprendre après l'étape de mise en dispersion aqueuse une étape supplémentaire, qui consiste à un simple mélange sous agitation pour homogénéiser, d'au moins une dispersion aqueuse telle que définie selon l'invention, avec au moins une autre dispersion aqueuse ou émulsion de polymère ou de résine compatible, choisie parmi : émulsion d'au moins un polymère tel qu'acrylique ou styrène-acrylique ou vinylique ou dispersion aqueuse d'au moins un polyuréthane ou d'au moins un copolymère d'acide (méth)acrylique ou d'au moins un copolymère d'anhydride maléique, lesdits copolymères pouvant être au moins partiellement neutralisés ou estérifiés par des alcools gras, lesquels alcools gras peuvent comprendre des insaturations siccatives.

Une dernière variante du procédé selon l'invention peut comprendre, après l'étape de la mise en dispersion aqueuse, une étape supplémentaire, qui est un simple mélange d'au moins deux dispersions telles que définies selon l'invention, ou d'au moins une dispersion selon l'invention avec au moins une autre dispersion de résine alkyde non traitée selon le traitement de l'invention.

Le troisième objet de l'invention est la dispersion aqueuse ayant une taille de particule moyenne allant de 50 à 500 nm et de préférence de 100 à 300 nm et un extrait sec allant de 30 à 70%, et de préférence de 40 à 60%, d'au moins une résine alkyde pouvant être obtenue selon au moins un mode de réalisation du procédé de l'invention tel que défini ci-dessus.

Le quatrième objet de l'invention concerne une composition aqueuse de revêtement comprenant comme liant au moins une dispersion aqueuse de résine alkyde telle que définie selon l'invention. Le revêtement est sélectionné parmi : peintures ou vernis aqueux décoratifs ou industriels. Ces compositions aqueuses de revêtement et en particulier les peintures et vernis ont l'avantage supplémentaire par rapport aux compositions conventionnelles d'avoir un taux réduit d'agent siccatif pour une durée de séchage significativement réduite ou l'absence totale d'agent siccatif pour une durée de séchage contrôlée et acceptable pour les applications finales, avec respect de l'environnement.

Un cinquième objet de l'invention concerne l'utilisation d'une dispersion aqueuse selon l'invention dans les revêtements décoratifs ou industriels aqueux, y compris revêtements anticorrosion pour métaux, pour substrats sélectionnés parmi : bois, métal, plastique, béton, plâtre, céramique, brique, composite. Les compositions de revêtements formulées à partir d'une dispersion aqueuse selon l'invention peuvent contenir un taux réduit d'au moins un agent siccatif et de préférence n'en contiennent aucun. L'avantage du séchage rapide des compositions de revêtements à base des dispersions aqueuses selon l'invention, lié aussi à l'avantage de la réduction jusqu'à l'absence de siccatif, permet l'utilisation de ces dispersions dans des applications spécifiques où le besoin de séchage rapide (< 6 h) est essentiel pour pouvoir appliquer au moins une deuxième couche dans la même journée. De même, des épaisseurs de revêtements un peu plus importantes seraient permises pour un temps de séchage plus court.

Le dernier objet de l'invention concerne des substrats revêtus avec au moins une des compositions de revêtements telles que définies ci-dessus et comprenant au moins une dispersion aqueuse de résine alkyde selon l'invention. De préférence, ces substrats revêtus ne contiennent aucun résidu d'agent siccatif à base de métaux lourds comme le cobalt, le manganèse, le vanadium, le zirconium, le calcium, le baryum, le lithium, le plomb, le strontium, le cérium, le zinc et le fer couramment utilisés dans les revêtements conventionnels. Les dispersions de l'invention et les revêtements qui en résultent sont ainsi favorables au respect de l'environnement, tout en ayant les autres performances d'application au moins identiques sinon améliorées par rapport aux revêtements aqueux conventionnels.

A titre d'illustration de l'invention, les exemples suivants démontrent sans aucune limitation, les performances des dispersions et des revêtements obtenus.

**I/ Matières premières utilisées :**

a) <u>Acides</u> :

| | Référence commerciale | Fournisseur | Indice d'acide (mg KOH/g) | Taux d'acide gras diénique conjugué (%) | Taux d'acide gras insaturé non conjugué (%) | Indice d'iode (cg I$_2$/g) 1 cg=10$^{-2}$ g |
|---|---|---|---|---|---|---|
| Acide gras de Tall | Sylfat® 2 | Arizona Chemicals | 192-195 | 6 | 90 | 148-155 |
| Acide gras de tournesol | Nouracid® HE30 | Uniqema | 198-202 | 0 | 83 | 130-146 |
| Acide gras d'huile de ricin déshydraté conjugué | Dedico 5981 | Uniqema | 193-198 | 60-65 | 28-39 | 163-173 |
| Acide gras de tournesol isomérisé | Nouracid HE305 | Akzo Nobel | 202 | 52,7 | 34,9 | 136 |
| Acide benzoïque | / | DSM Special Products | 459,5 | / | / | / |
| Anhydride phtalique | / | BASF | 757,1 | / | / | / |
| Acide hypophosphoreux (50% dans l'eau) | / | Merck Eurolab / Prolabo | / | / | / | / |

b) Polyols :

| | Fournisseur | Nature |
|---|---|---|
| Pentaérythritol | Perstorp | Polyol |

c) Résines alkydes masse avant traitement/dispersion :

La résine α est une résine alkyde conventionnelle pour dispersion. Elle constitue un exemple comparatif par rapport à la résine β selon l'invention. La résine γ constitue un exemple comparatif selon US 2 981 703 Ex 1 - C2 - L57 à C3 - Ll. La résine δ est un autre exemple selon l'invention.

| Référence résine masse | α (comp.) | β | γ (comp.) | δ |
|---|---|---|---|---|
| Procédé | cf. III | cf. III | US 2 981 703 (*) Exl-C2-L57 àC3-Ll | cf. III |
| Acide gras de Tall | 174, 59 | / | (*) | / |
| Acide gras de Tournesol | 174,59 | / | | / |
| Dedico 5981 | / | 348,06 | | / |
| Nouracid HE 305 | / | / | | 345,12 |
| Pentaérythritol | 221,94 | 229,24 | | 227,08 |
| Acide benzoïque | 174,59 | 180,03 | | 178,42 |
| Anhydride phtalique | 254,04 | 242,44 | | 240,14 |

Suite de tableau

| Référence résine masse | α (comp.) | β | γ (comp.) | δ |
|---|---|---|---|---|
| Acide hypophosphoreux | 0,25 | 0,23 | | 0,23 |
| | | | | |
| Taux d'acide gras insaturé conjugué / résine (%) | 1,13 | 22,6 | 0 | 19,8 |
| Taux d'acide gras total / résine (%) | 37,8 | 37,1 | 46,8 | 37,6 |
| Extrait sec (%) (1g, 1h, 125°C) | > 99 | > 99 | > 99 | > 99 |
| Viscosité (Noury, 110°C, mPa.s) | 3950-5300 | 3950-5300 | | 3980 |
| Indice d'acide $I_A$ (mg KOH/g) | 9-14 | 18-22 | 62 | 19,6 |
| Indice d'hydroxyle $I_{OH}$ (mg KOH/g) | 34-40 | 54-60 | 229 | 65 |
| Fonctionnalité f | 2,03 | 1,98 | 1,94 | 1,98 |
| Mw | 23000-27000 | 17000-25000 | / | / |
| f : fonctionnalité de la résine : $f = 2 \sum_i n_i f_i / M$ $n_i$, $f_i$ étant respectivement le nombre de moles et la fonctionnalité du (poly)acide et M le nombre de moles total $I_A$ (mg KOH/g) : Indice d'acide exprimé en mg KOH/g $I_{OH}$ (mg KOH/g) : indice d'hydroxyle exprimé en mg KOH/g | | | | |

d) <u>Autres additifs</u> :

| | Fournisseur | Nature/ Fonction |
|---|---|---|
| LiOH monohydraté | VWR International (Prolabo) | Neutralisant (dilué à 10% dans l'eau) |
| Alcool iso C10 éthoxylé 41 OE : HLB = 18,3 | / | Tensioactif non-ionique |
| Alcool gras monobranché éthoxylé 31 OE : HLB = 17,4 | / | Tensioactif non-ionique |
| $H_2O_2$ dilué à 30% dans l'eau | VWR International (Prolabo) | $H_2O_2$ dilué à 30% dans l'eau |
| Acticide® SPX | Thor Chemie | Biocide (formulation à base de 2-méthyl-4-isothiazolin-3-one et 5-chloro-2-méthyl-4-isothiazolin-3-one) |
| Dispex® N40 | Ciba Speciality Chemicals | Agent dispersant (Polyacrylate de Sodium) |
| Byk® 024 | Byk Chemie | Antimousse (mélange de polysiloxanes) |
| Durham Co® 10WM | Elementis Specialities | Siccatif à base de carboxylate de cobalt |
| Acrysol® RM2020 | Rohm & Haas | Epaississant uréthane non ionique (HEUR) |
| Acrysol® RM8W | Rohm & Haas | Epaississant uréthane non ionique (HEUR) |
| Tioxide® RHD2 | Hunstman Tioxide | Dioxyde de Titane |

## II/ **Méthodes de tests** :

1) Extrait sec :

Evaluation suivant ISO 3251 selon les conditions : 1g, 1h, 125°C et exprimé en %.

2) Viscosité :

Evaluation de la viscosité Noury à 110°C sur résine masse selon la norme AFNOR XPT 51213 et exprimée en mPa.s.
Evaluation de la viscosité Brookfield à 23°C, 10 rpm à l'aide des mobiles 2 et 3 sur un viscosimètre Brookfield RVDVE- 230 selon la norme ISO 2555.

3) Taille de particules :

Taille des particules mesurées à l'aide d'un appareillage de type Zetasizer-Malvern Instruments Ltd. L'échantillon de dispersion est dilué dans une cuve transparente à l'aide d'eau déionisée filtrée, la taille des particules est mesurée par diffusion laser à 90°.

4) Indice d'acide et Indice d'hydroxyle :

Indice d'acide évalué suivant la norme ISO 3682.
Indice d'hydroxyle évalué suivant la norme NFT 30-403.

5) Indice d'iode :

Evalué suivant la norme NFT 60-203.

6) Temps de séchage :

Les temps de séchage sont évalués à l'aide d'un enregistreur de temps de séchage BK à 3 vitesses (6h, 12h, 24h) dénommé « The BK drying recorders », connu de l'homme du métier et dont la notice donne le mode d'évaluation. Appareillage fabriqué par « The Mickle Laboratory Engineering Co. Ltd - Goose Green, Gomshall, Guilford, Surrey GU5 9LJ. UK ».
Les mesures du temps de séchage, notamment à coeur, sont effectuées sur film humide d'épaisseur 75 $\mu$m appliqué au hand coater pour différents temps de séchage. Chaque série d'échantillons est évaluée comparativement à un échantillon de référence.

7) Dureté :

La dureté est évaluée à l'aide d'un pendule de dureté Persoz, sur des films de 100 $\mu$m d'épaisseur humide appliqués sur plaques de verre, après différents temps de séchage et selon la norme ISO 1522.

8) Jaunissement :

Appareillage du type Spectrocolorimètre « Dr Lange » Micro Color LMC.
Mesures de l'indice de jaunissement Yi (= « Yellowing Index ») selon la norme ASTM D1925 sur films secs à différents temps de séchage.
Les films d'épaisseur humide 150 $\mu$m sont appliqués sur cartes Leneta à l'aide d'un filmographe Bird.

9) Brillant:

Les mesures sont effectuées à l'aide d'un brillancemètre « micro-TRI-gloss » de BYK Gardner GmbH à 20° et 60°, après différents temps de séchage de films humides de 200 $\mu$m déposés sur plaques de verre et selon la norme ISO 2813.

10) Module élastique dynamique :

Le module élastique dynamique E' est évalué par DMTA (Dynamic Mechanical Thermal Analysis) à l'aide d'un rhéomètre Rheometric Solid Analyser (RSAII) à une fréquence de 1 Hz avec une rampe de montée en température de 5°C par minute de -100°C à +250°C sur un film d'épaisseur humide 500 $\mu$m pour différents temps de séchage à 23°C, 50% $\pm$ 5% d'humidité relative.

**III/ Préparation et évaluation des dispersions :**

1) Procédé de préparation de la résine masse avant traitement/dispersion :

Chauffage, sous bullage d'azote, des différents constituants, la réaction d'estérification ayant lieu entre 230 et 250°C, selon un procédé « fusion » connu de l'homme de l'art de sorte que la résine ait les caractéristiques définies dans le tableau I-c).

2) Dispersion de la résine masse :

Chauffer la résine à disperser entre 60 et 100°C.

Ajouter le tensioactif et agiter en conservant la même température puis ajouter LiOH (10%) agent de neutralisation en maintenant l'agitation. Après 10 min., ajouter progressivement l'eau déionisée. Généralement, avant l'inversion lorsqu'une émulsion eau dans huile est formée, la viscosité du mélange est assez élevée. C'est pourquoi une agitation vigoureuse est nécessaire pour obtenir un bon mélange des composants. Enfin, ajouter le biocide, ajuster l'extrait sec et le pH si nécessaire.

3) Traitement par $H_2O_2$:

a) Traitement d'oxydation avant dispersion de la résine :

Suivant le cas, la résine est chauffée à la température de traitement (entre 60 et 150°C). Après addition du tensioactif, on ajoute progressivement $H_2O_2$ en maintenant l'agitation et la température. On procède ensuite à la neutralisation à une température inférieure à 100°C. La résine ainsi traitée est ensuite dispersée toujours à une température inférieure à 100°C.

Dans un autre mode de traitement, lorsque le traitement oxydant est réalisé à une température inférieure à 100°C, la neutralisation peut être effectuée avant le traitement oxydant.

b) Traitement oxydant après dispersion:

Une fois la résine dispersée et préparée selon III 2), l'ajout d'$H_2O_2$ s'effectue progressivement à une température comprise entre 60 et 100°C sous agitation. Après ajout, l'émulsion est refroidie lentement à température ambiante.

## 4) Composition des dispersions :

Tableau 1a : Composition des dispersions

| | Ex 1 (comp.) | Ex 2 (comp.) | Ex 3 (comp.) | Ex 4 | Ex 5 | Ex 6 (comp.) | Ex 7 (comp.) | Ex 8 | Ex 9 | Ex 10 (comp.) | Ex 11 |
|---|---|---|---|---|---|---|---|---|---|---|---|
| Résine α | 456,6 | 456,6 | / | / | / | / | Résine γ | / | / | / | / |
| Résine β | / | / | 462,46 | 462,46 | 462,46 | ** | *** | 462,46 | 462,46 | / | / |
| Résine γ | / | / | / | / | / | / | | / | / | / | / |
| Résine δ | / | / | / | / | / | / | Neutralisation à l'ammoniaque avant dispersion | / | / | 462,46 | 462,46 |
| Alcool gras * monobranché éthoxylé 31 OE : HLB = 17,4 | 41,1 | 41,1 | / | / | / | / | | / | / | / | / |
| Alcool iso $C_{10}$ * éthoxylé 41 OE : HLB = 18,3 | / | / | 41,62 | 41,62 | 41,62 | / | | 41,62 | 41,62 | 41,62 | 41,62 |
| $H_2O_2$ (30%) | 0 | 15,22 | 0 | 7,71 | 15,42 | 0 | | 15,42 | 15,42 | 0 | 15,42 |
| LiOH (10%) | 17,2 | 17,2 | 5,92 | 5,92 | 5,92 | / | | 5,92 | 5,92 | 5,92 | 5,92 |
| Eau déionisée | 484,1 | 484,1 | 489 | 489 | 489 | / | | 489 | 489 | 489 | 489 |
| Acticide SPX | 1 | 1 | 1 | 1 | 1 | / | | 1 | 1 | 1 | 1 |

*TANI : Tensioactif non-ionique

** : la résine utilisée dans l'exemple 6 est la résine β; elle n'a pu être émulsifiée puisqu'elle a géfifié après 2,5 h de traitement d'oxydation à l'oxygène de l'air.

*** : Cf US 2 981 703 Ex 1 - C2 L57 à C3 L1

EP 1 590 404 B1

## 5) Procédé d'obtention des dispersions :

Tableau 1b : Procédé d'obtention des dispersions (conditions spécifiques)

| | Ex 1 (comp.) | Ex 2 (comp.) | Ex 3 (comp.) | Ex 4 | Ex 5 | Ex 6 [*] (comp.) | Ex 7 (comp.) | Ex 8 | Ex 9 | Ex 10 (comp.) | Ex 11 |
|---|---|---|---|---|---|---|---|---|---|---|---|
| Taux de $H_2O_2$ pur / résine (%) | 0 | 1 | 0 | 0,5 | 1 | 0 | 5 | 1 | 1 | 0 | 1 |
| Traitement avant / après dispersion | | avant | | avant | avant | *$O_2$ avant | avant | avant | après | | avant |
| Durée Traitement (min.) | | 45 | | 45 | 45 | Gel après 150 | 60 | 30 | 30 | | 45 |
| Température de traitement oxydant (°C) | | 75 | | 75 | 75 | 120 | 150-160 | 100 | 75 | | 75 |
| Neutralisation avant/après traitement | | avant | | avant | avant | / | après | après | avant | | avant |

\* : selon US 3 222 308 C9-L53-56 ex III : traitement par $O_2$

EP 1 590 404 B1

6) <u>Caractéristiques essentielles des dispersions</u> :

<u>Tableau 1c</u> : Caractéristiques essentielles des dispersions

| | Ex 1 (comp.) | Ex 2 (comp.) | Ex 3 (comp.) | Ex 4 | Ex 5 | Ex 6 (comp.) | Ex 7 (comp.) | Ex 8 | Ex 9 | Ex 10 (comp.) | Ex 11 |
|---|---|---|---|---|---|---|---|---|---|---|---|
| Viscosité Brookfield (mPa.s) | 92 | 145 | 4176 | 2153 | 816 | Gel au bout de 150 mn | / | 992 | 184 | 1220 | 1350 |
| Extrait sec ISO 3251 | 50,5 | 51,6 | 50,9 | 50,1 | 51,2 | | 40 | 51,0 | 49,2 | 50,6 | 50,7 |
| Taille de particules (Zetasizer)(nm) cf. II-3) | 210 | 195 | 112 | 135 | 147 | | / | 170 | 113 | 145 | 157 |

(comp.) : exemples comparatifs. Les autres exemples sont selon l'invention.

EP 1 590 404 B1

7) Module élastique dynamique des films secs de dispersions :

Les films d'épaisseur humide 500 μm (cf. II-10) sont appliqués sur plaques de polypropylène à partir de dispersions additivées ou pas d'agent siccatif à base de cobalt de type Durham Co 10WM.

| Echantillon | Acide gras conjugué | Co / résine masse | $H_2O_2$ | E' (MPa) 50 jours |
|---|---|---|---|---|
| Ex 1 + 0,1% Co * (comp) | non | 0,1% | 0% | 0,48 |
| Ex 5 | oui | 0% | 1% | 1,54 |
| * : 0,1% en poids Cobalt sur Liant sec (= 100g Ex 1 + 0,5g Durham Co 10WM) | | | | |

Le module élastique dynamique au plateau E' est un indicateur du taux de réticulation du film dans son ensemble.

**IV/ Préparation des formulations peintures à base des dispersions aqueuses et performances des films :**

L'évaluation des performances des dispersions alkydes décrites précédemment est effectuée sur des films appliqués à partir de formulations de peintures brillantes. Un siccatif à base de cobalt (Durham Co 10WM - Elementis Specialties) est ajouté dans les exemples comparatifs pour montrer les performances avec et sans siccatif.

Mode opératoire général de formulation des peintures :

On verse dans un récipient, muni d'une enveloppe réfrigérée, une grande partie de l'eau, on ajoute ensuite sous agitation lente le biocide, l'agent dispersant, l'antimousse, le dioxyde de titane et une partie de l'épaississant à haut gradient de cisaillement. La vitesse de disperseur (Dispermat® CV) est alors ajustée de manière à obtenir une dispersion optimale. La dispersion est effectuée pendant 20 minutes. La base de broyage ainsi préparée est ensuite incorporée dans la dispersion alkyde mélangée ou non avec le siccatif. Les épaississants sont ensuite ajoutés pour régler la rhéologie.

Tableau 2 : Composition des formulations

Formulation 1 :

| Composant / Référence | Fonction | Parties en poids |
|---|---|---|
| Eau | | 83,65 |
| Acticide SPX | Biocide | 1,5 |
| Dispex N40 | Agent Dispersant | 1,55 |
| Byk 024 | Antimousse | 1,3 |
| Tioxide RHD2 | Dioxyde de Titane | 258 |
| Dispersion Alkyde (à 50% Extrait Sec) | Liant | 633 |
| Durham Co 10WM | Siccatif à base de cobalt | 0 ou 2,8 |
| Acrysol RM2020 | Epaississant haut gradient de cisaillement | 18 |
| Acrysol RM8W | Epaississant bas gradient de cisaillement | 3 |

Caractéristiques calculées de la formulation n°1 (sans siccatif) :

CPV = 18.8%

Extrait sec en poids = env. 58%
Extrait sec en volume = env. 45%

**V/ <u>Performances des films de peintures</u> :**

L'épaisseur du film et son mode d'application varient suivant le test désiré.

Pour chaque mesure, se référer à la méthode de test correspondante dans le paragraphe II.

Tableau 3 : Performances des films de peintures à base de dispersions aqueuses d'alkydes

| | A | B | C | D | E | F | G | H | I | J | K | L | M | N |
|---|---|---|---|---|---|---|---|---|---|---|---|---|---|---|
| Dispersion | Ex 1 | Ex 2 | Ex 2 | Ex 3 | Ex 4 | Ex 5 | Ex 4 | Ex 5 | Ex. 8 | Ex. 7 | Ex 9 | Ex 10 | Ex 11 | Ex 11 |
| Présence d'acides gras conjugués | non | non | non | oui | oui | oui | oui | oui | oui | non | oui | oui | oui | oui |
| Taux de $H_2O_2$ % | 0 | 1 | 1 | 0 | 0,5 | 1 | 0,5 | 1 | 1 | 5 | 1 | 0 | 1 | 1 |
| Formulation Peinture | n°1 | n°1 | n°1 | n°1 | n°1 | n°1 | n°1 | n°1 | n°1 | n°1 | n°1 | n°1 | n°1 | n°1 |
| Présence de siccatifs | oui | oui | non | oui | oui | oui | non | non | non | non | non | oui | oui | non |
| Temps de séchage à cœur (h) BK 12h | 8 | 5 | >12 | 6 | 3 | 2 | 7 | 4 | 4 | >12 | 4,5 | 7 | 2,5 | 4,5 |
| Dureté Persoz (s) 1 jour | 65 | 71 | 54 | 55 | 63 | 57 | 37 | 38 | | | | 40 | 48 | 37 |
| 4 jours | 139 | 129 | 85 | 120 | 103 | 114 | 78 | 81 | | | | 71 | 81 | 55 |
| 7 jours | 145 | 137 | 89 | 156 | 142 | 150 | 104 | 107 | | | | 103 | 85 | 57 |
| 14 jours | 167 | 167 | 106 | 175 | 155 | 168 | 110 | 121 | | | | 121 | 110 | 67 |

EP 1 590 404 B1

## Tableau 3 – Suite

| | A | B | C | D | E | F | G | H | I | J | K | L | M | N |
|---|---|---|---|---|---|---|---|---|---|---|---|---|---|---|
| Dispersion | Ex 1 | Ex 2 | Ex 2 | Ex 3 | Ex 4 | Ex 5 | Ex 4 | Ex 5 | Ex. 8 | Ex. 7 | Ex 9 | Ex 10 | Ex 11 | Ex 11 |
| **Jaunissement Yi** | | | | | | | | | | | | | | |
| Après 24h | 8,6 | 9,5 | 9,1 | 8,1 | 9,7 | 9,7 | 8,6 | 8,8 | | | | 6,3 | 8,7 | 8,6 |
| Après 1 sem/23°C/50±5% HR | 9,4 | 10,7 | 9,7 | 9,7 | 10,5 | 9,9 | 8,8 | 9,6 | | | | 9,5 | 10,2 | 9,1 |
| Après 2 sem/23°C/50±5% HR | 9,9 | 10,8 | 10,2 | 9,9 | 11 | 10 | 9,4 | 10,2 | | | | 9,4 | 10,4 | 9,8 |
| Après 1 sem/étuve à 50°C | 13 | 13,1 | 12 | 10,6 | 12 | 12 | 10,7 | 10 | | | | 10,7 | 11,4 | 9,9 |
| Après 2 sem/étuve à 50°C | 15 | 14,9 | 14 | 13,5 | 13,4 | 13,5 | 12,7 | 11,9 | | | | 12,4 | 12,9 | 11,9 |
| **Brillant (%)** | | | | | | | | | | | | | | |
| Après 24h | | | | | | | | | | | | | | |
| 20° | 88,8 | 87,1 | 88 | 88,9 | 87,4 | 84 | 88,9 | 87,9 | | | | 89,7 | 87,1 | 90,6 |
| 60° | 95,8 | 95,6 | 95,3 | 96,2 | 95,8 | 94 | 95,8 | 95,2 | | | | 95,9 | 94,3 | 95,3 |
| Après 2 sem/23°C/50±5% HR | | | | | | | | | | | | | | |
| 20° | 81,4 | 80,1 | 85,2 | 86,3 | 79,2 | 73,7 | 84,9 | 81,9 | | | | 82,6 | 82,2 | 84,3 |
| 60° | 92,4 | 92,6 | 92,9 | 95 | 92,2 | 90,7 | 93,3 | 93,1 | | | | 91 | 93,1 | 91,7 |
| Après 2 sem/étuve à 50°C | | | | | | | | | | | | | | |
| 20° | 66,8 | 66,6 | 84,3 | 65 | 76,9 | 64,6 | 85 | 81,9 | | | | 81,1 | 75,5 | 82 |
| 60° | 87,1 | 89,3 | 92,7 | 89,2 | 92,4 | 88,1 | 93,7 | 93,1 | | | | 92,6 | 90,1 | 89,5 |

**Revendications**

1. Dispersion aqueuse comprenant au moins une résine alkyde, **caractérisée en ce que** ladite résine alkyde est obtenue à partir d'au moins un acide gras insaturé conjugué représentant en poids au moins 5% de ladite résine et **en ce que** ladite résine est traitée avant et/ou pendant et/ou après la mise en dispersion aqueuse par au moins un agent oxydant sélectionné parmi : les hydroperoxydes, y compris $H_2O_2$, les peroxydes, l'oxygène singulet, et que la température de traitement oxydant se situe :

   i) de l'ambiante à moins de 100°C, de préférence de 50 à 90°C lorsqu'il a lieu après la mise en dispersion aqueuse, et
   ii) de 50 à 150°C, lorsqu'il a lieu avant la mise en dispersion aqueuse, et
   iii) de 50 à moins de 100°C, et de préférence de 50 à 90°C lorsque le traitement a lieu pendant l'étape de dispersion aqueuse et **en ce que** la taille moyenne des particules est de 50 à 500 nm et que le taux d'extrait sec est de 30 à 70%

2. Dispersion aqueuse selon la revendication 1 **caractérisée en ce que** le taux d'acide gras insaturé conjugué dans ladite résine est d'au moins 10% en poids et que ledit agent oxydant est sélectionné parmi : les hydroperoxydes de formule générale ROOH avec R choisi parmi H, alkyles, aralkyles et un taux allant de 0,05 à 5% en poids par rapport au total de ladite résine.

3. Dispersion aqueuse selon l'une des revendications 1 ou 2 **caractérisée en ce que** le taux d'acide gras insaturé conjugué est de 10 à 60% en poids et de préférence de 15 à 50% et que le taux total d'acide gras est de 30 à 70% en poids, par rapport à ladite résine, avec un taux en poids d'acide gras insaturé conjugué sur le total d'acide gras variant de 15 à 85% et de préférence de 25 à 70%.

4. Dispersion selon l'une des revendications 1 à 3 **caractérisée en ce que** ledit hydroperoxyde est choisi parmi : $H_2O_2$, hydroperoxyde de cumyle ou de t-butyle et de préférence $H_2O_2$ aqueux.

5. Dispersion selon l'une des revendications 1 à 4 **caractérisée en ce que** ledit traitement oxydant a lieu en l'absence de tout agent siccatif.

6. Dispersion aqueuse selon l'une des revendications 1 à 5 **caractérisée en ce que** ladite résine alkyde, avant traitement oxydant, a une masse moléculaire moyenne en poids Mw allant de 10000 à 500000 et de préférence de 20000 à 300000 et un indice d'acide ne dépassant pas 70, un indice de OH allant de 20 à 150 et une fonctionnalité moyenne f allant de 1,9 à 2,1.

7. Dispersion aqueuse selon l'une des revendications 1 à 6 **caractérisée en ce que** ledit acide gras insaturé conjugué est le produit d'isomérisation d'acides gras insaturés choisis parmi l'acide linoléique, linolénique, acide gras de tournesol, de lin, de soja ou les produits de déshydratation de l'acide gras de ricin.

8. Dispersion aqueuse selon l'une des revendications 1 à 7 **caractérisée en ce que** le composant acide à partir duquel est obtenue ladite résine comprend en plus de l'acide gras insaturé conjugué, au moins un autre acide gras insaturé non conjugué, au moins un acide gras saturé, au moins un polyacide carboxylique ou dérivé d'anhydride correspondant et au moins un monoacide carboxylique non gras.

9. Dispersion aqueuse selon l'une des revendications 1 à 8 **caractérisée en ce que** l'agent oxydant est $H_2O_2$ en solution aqueuse à une concentration allant de 15 à 60% et de préférence 25 à 45% en poids par rapport à la solution aqueuse et à un taux de 0,05 à 2% en poids par rapport à ladite résine alkyde.

10. Dispersion aqueuse selon l'une des revendications 1 à 9 **caractérisée en ce que** le traitement oxydant a lieu après l'étape de mise en dispersion aqueuse de ladite résine alkyde, à une température de traitement inférieure à 100°C et de préférence de 50 à 90°C.

11. Dispersion aqueuse selon l'une des revendications 1 à 10 **caractérisée en ce que** le traitement oxydant a lieu avant la mise en dispersion directement sur la résine alkyde à une température allant de 50 à 150°C.

12. Dispersion aqueuse selon l'une des revendications 1 à 11 **caractérisée en ce qu'**elle comprend au moins un tensioactif sélectionné parmi les tensioactifs ioniques et/ou non ioniques et/ou mixtes.

**13.** Dispersion aqueuse selon l'une des revendications 1 à 12 **caractérisée en ce qu'**elle comprend au moins un tensioactif non ionique, éventuellement combiné avec au moins un tensioactif anionique à un taux global en poids allant de 5 à 15% de préférence de 7 à 12% par rapport à ladite résine alkyde et, dans le cas de présence de tensioactifs anioniques avec un rapport en poids ionique sur non ionique allant de 25/75 à 50/50.

**14.** Dispersion aqueuse selon l'une des revendications 1 à 13 **caractérisée en ce qu'**en plus elle comprend au moins un autre polymère ou au moins une autre résine additionnée après la mise en dispersion, ladite addition étant réalisée par simple mélange avec au moins une autre émulsion de polymère acrylique ou styrène-acrylique ou vinylique ou avec au moins une dispersion aqueuse de polyuréthane ou d'au moins un copolymère d'acide (méth) acrylique ou d'au moins un copolymère d'anhydride maléique pouvant être au moins partiellement estérifiés par des alcools gras pouvant comprendre des insaturations siccatives.

**15.** Dispersion aqueuse selon l'une des revendications 1 à 14 **caractérisée en ce qu'**elle est le produit de mélange d'au moins deux dispersions telles que définies selon l'une des revendications 1 à 14 ou d'au moins une dispersion telle que définie selon ces revendications avec au moins une autre dispersion de résine alkyde non traitée.

**16.** Procédé de préparation d'une dispersion aqueuse définie selon l'une des revendications 1 à 15 **caractérisé en ce qu'**il comprend au moins les étapes suivantes :

> a) traitement oxydant avant et/ou pendant et/ou après l'étape de mise en dispersion d'au moins une résine alkyde, ayant un taux en poids d'acide gras insaturé conjugué d'au moins 5% par rapport au total de résine alkyde, par au moins un agent oxydant sélectionné parmi : les hydroperoxydes y compris $H_2O_2$, les peroxydes, l'oxygène singulet,
> et à une température allant :

>> i) de l'ambiante à moins de 100°C et de préférence de 50 à 90°C, lorsque ledit traitement oxydant a lieu après l'étape de mise en dispersion aqueuse, et
>> ü) de 50 à 150°C, lorsque ledit traitement oxydant a lieu avant l'étape de mise en dispersion aqueuse
>> iii) de 50 à moins de 100°C et de préférence de 50 à 90°C, lorsque le traitement oxydant a lieu pendant l'étape de dispersion aqueuse

> b) dispersion aqueuse de ladite résine alkyde avant ou pendant ou après traitement oxydant

**17.** Procédé selon la revendication 16 **caractérisé en ce que** le taux en poids d'acide gras insaturé conjugué par rapport au total de ladite résine alkyde est d'au moins 10% en poids et que ledit agent oxydant est sélectionné parmi : les hydroperoxydes de formule générale ROOH avec R choisi parmi H, alkyles, aralkyles et avec un taux en poids allant de 0,05 à 5% par rapport au total de ladite résine.

**18.** Procédé selon les revendications 16 ou 17 **caractérisé en ce que** le taux en poids d'acide gras insaturé conjugué est de 10 à 60% et que le taux total en poids d'acide gras est de 30 à 70% par rapport à ladite résine, avec un taux en poids d'acide gras insaturé conjugué sur le total d'acide gras variant de 15 à 85%.

**19.** Procédé selon l'une des revendications 16 à 18 **caractérisé en ce que** ledit traitement oxydant est réalisé à l'aide d'une solution aqueuse de $H_2O_2$ de 15 à 60% et de préférence de 25 à 45% en $H_2O_2$.

**20.** Procédé selon l'une des revendications 16 à 19 **caractérisé en ce qu'**il comprend une étape supplémentaire de neutralisation postérieure ou antérieure à celle du traitement oxydant.

**21.** Procédé selon l'une des revendications 16 à 20 **caractérisé en ce que** la dispersion aqueuse de la résine alkyde est réalisée après neutralisation au moins partielle des fonctions carboxy de la résine alkyde.

**22.** Procédé selon l'une des revendications 16 à 21 **caractérisé en ce que** la mise en dispersion est réalisée en présence d'au moins un tensioactif sélectionné parmi les tensioactifs ioniques et/ou non ioniques et/ou mixtes.

**23.** Procédé selon la revendication 22 **caractérisé en ce que** le tensioactif est au moins un tensioactif non ionique, éventuellement combiné avec au moins un tensioactif anionique à un taux global en poids allant de 5 à 15%, de préférence de 7 à 12% par rapport à ladite résine alkyde, et dans le cas de présence de tensioactifs anioniques avec un rapport en poids ionique sur non ionique allant de 25/75 à 50/50.

**24.** Procédé selon l'une des revendications 22 ou 23 **caractérisé en ce que** ledit tensioactif non ionique est sélectionné parmi : les alcools gras en $C_{12}$-$C_{18}$ éthoxylés avec 2 à 35 EO, alcools gras iso $C_{10}$ éthoxylés avec 2-40 EO, alcools gras monobranchés éthoxylés en $C_{10}$-$C_{18}$ avec 2-40 EO, esters de sorbitol en $C_{18}$, esters de sorbitol éthoxylés avec 5-20 motifs EO, ou acides gras en $C_{12}$-$C_{18}$ éthoxylés avec 7-100 EO, huile de ricin éthoxylée avec 30-40 EO, huile de ricin hydrogénée éthoxylée avec 7-60 EO, esters gras de palmitate de glycérol, stéarate de glycérol, stéarate d'éthylène glycol, stéarate de diéthylène glycol, stéarate de propylène glycol, stéarate de polyéthylène glycol 200 ou ester gras éthoxylé avec 2-15 EO en $C_{18}$.

**25.** Procédé selon la revendication 20 **caractérisé en ce que** l'étape de neutralisation est réalisée par un agent de neutralisation sélectionné parmi : hydroxyde de métal alcalin, plus particulièrement LiOH, KOH, NaOH ou aminés plus particulièrement l'ammoniaque, la triéthylamine, la diéthanolamine, l'amino méthyl propanol.

**26.** Procédé selon l'une des revendications 16 à 25 **caractérisé en ce que** l'étape de traitement oxydant est réalisée, à une température de 50 à 150°C. avant l'étape de la mise en dispersion aqueuse et avant une étape de neutralisation et après l'étape finale de préparation de ladite résine alkyde.

**27.** Procédé selon l'une des revendications 16 à 25 **caractérisé en ce que** l'étape de traitement oxydant est réalisée, à une température allant de l'ambiante à moins de 100°C, de préférence 50 à 90°C, après la mise en dispersion aqueuse et après une étape de neutralisation de la résine alkyde ayant lieu avant l'étape de la mise en dispersion aqueuse.

**28.** Procédé selon l'une des revendications 14 à 25 **caractérisé en ce que** l'étape de la mise en dispersion aqueuse est réalisée en présence d'un tensioactif et par un procédé d'inversion de phase et en utilisant comme moyen de dispersion soit un disperseur mécanique soit un appareil sonificateur à ultrasons.

**29.** Procédé selon l'une des revendications 16 à 28 **caractérisé en ce que** l'étape de traitement oxydant a lieu soit avant et après soit avant et pendant soit pendant et après soit avant et pendant et après l'étape de mise en dispersion aqueuse.

**30.** Procédé selon l'une des revendications 16 à 29, **caractérisé en ce qu'**il comprend après l'étape de mise en dispersion aqueuse une étape supplémentaire, qui est un simple mélange, sous agitation pour homogénéiser, d'au moins une dispersion aqueuse telle que définie selon l'une des revendications 1 à 13 ou obtenues par le procédé défini à l'une des revendications 16 à 29 avec au moins une autre dispersion aqueuse ou émulsion de polymère ou de résine compatible, choisie parmi les émulsions d'au moins un polymère acrylique ou styrène acrylique ou vinylique ou au moins une dispersion aqueuse d'au moins un polyuréthane compatible ou d'au moins un copolymère d'acide (méth)acrylique ou d'au moins un copolymère d'anhydride maléique, lesdits copolymères pouvant être au moins partiellement neutralisés ou estérifiés par des alcools gras, lesquels alcools gras peuvent comprendre des insaturations siccatives.

**31.** Procédé selon l'une des revendications 16 à 29, **caractérisé en ce qu'**il comprend après l'étape de la mise en dispersion aqueuse une étape supplémentaire, qui est un simple mélange d'au moins deux dispersions telles que définies à l'une de des revendications 1 à 13 ou obtenues selon le procédé défini à l'une des revendications 16 à 30, ou d'au moins une dispersion telle que définie selon les revendications 1 à 13 avec au moins une autre dispersion de résine alkyde non traitée.

**32.** Dispersion aqueuse d'au moins une résine alkyde pouvant être obtenue selon le procédé tel que défini selon l'une des revendications 16 à 31.

**33.** Composition aqueuse de revêtement comprenant comme liant au moins une dispersion aqueuse telle que définie selon l'une des revendications 1 à 15 ou 32 ou telle qu'obtenue selon le procédé défini selon l'une des revendications 16 à 31.

**34.** Composition selon la revendication 33 **caractérisée en ce que** ledit revêtement est sélectionné parmi : peintures ou vernis aqueux décoratifs ou industriels.

**35.** Composition selon l'une des revendications 33 ou 34 **caractérisée en ce qu'**elle comprend au moins un agent siccatif à taux réduit ou de préférence qu'elle ne comprend aucun agent siccatif.

**36.** Utilisation d'une dispersion aqueuse selon l'une des revendications 1 à 15 ou 32 ou telle qu'obtenue selon le procédé de l'une des revendications 16 à 31 dans les revêtements décoratifs ou industriels aqueux, y compris anti corrosion, pour substrats sélectionnés parmi : bois, métal, plastique, béton, plâtre, céramique, brique, composite.

**37.** Substrats revêtus avec au moins une des compositions de revêtements telles que définies selon les revendications 33 à 35.

**Patentansprüche**

**1.** Wäßrige Dispersion, die mindestens ein Alkydharz enthält, **dadurch gekennzeichnet, daß** das Alkydharz aus mindestens einer konjugierten ungesättigten Fettsäure, die mindestens 5 Gew.-% des Harzes ausmacht, erhalten worden ist, das Alkydharz vor und/oder während und/oder nach der Bildung der wäßrigen Dispersion mit mindestens einem unter Hydroperoxiden einschließlich $H_2O_2$, Peroxiden und Singulett-Sauerstoff ausgewählten Oxidationsmittel behandelt worden ist und die Temperatur der Oxidationsbehandlung in folgenden Bereichen liegt:

i) von Umgebungstemperatur bis weniger als 100°C und vorzugsweise von 50 bis 90°C, wenn sie nach der Bildung der wäßrigen Dispersion erfolgt, und
ii) von 50 bis 150°C, wenn sie vor der Bildung der wäßrigen Dispersion erfolgt, und
iii) von 50 bis weniger als 100°C und vorzugsweise von 50 bis 90°C , wenn die Behandlung während der Bildung der wäßrigen Dispersion erfolgt

und **dadurch**, daß die mittlere Teilchengröße 50 bis 500 nm beträgt und der Feststoffgehalt 30 bis 70% beträgt.

**2.** Wäßrige Dispersion nach Anspruch 1, **dadurch gekennzeichnet, daß** der Gehalt an konjugierter ungesättigter Fettsäure in dem Harz mindestens 10 Gew.-% beträgt und das Oxidationsmittel unter Hydroperoxiden der allgemeinen Formel ROOH, worin R unter H, Alkylgruppen und Aralkylgruppen ausgewählt ist, ausgewählt ist und in einer Menge von 0,05 bis 5 Gew.-%, bezogen auf das gesamte Harz, vorliegt.

**3.** Wäßrige Dispersion nach Anspruch 1 oder 2, **dadurch gekennzeichnet, daß** der Gehalt an konjugierter ungesättigter Fettsäure 10 bis 60 Gew.-% und vorzugsweise 15 bis 50% beträgt und der Gesamtgehalt an Fettsäure 30 bis 70 Gew.-%, bezogen auf das Harz, beträgt, wobei der Gewichtsanteil an konjugierter ungesättigter Fettsäure in bezug auf die gesamte Fettsäure 15 bis 85% und vorzugsweise 25 bis 70% beträgt.

**4.** Dispersion nach einem der Ansprüche 1 bis 3, **dadurch gekennzeichnet, daß** das Hydroperoxid unter $H_2O_2$, Cumylhydroperoxid oder tert.-Butylhydroperoxid und vorzugsweise wäßrigem $H_2O_2$ ausgewählt ist.

**5.** Dispersion nach einem der Ansprüche 1 bis 4, **dadurch gekennzeichnet, daß** die Oxidationsbehandlung in Abwesenheit von Trockenstoffen erfolgt.

**6.** Wäßrige Dispersion nach einem der Ansprüche 1 bis 5, **dadurch gekennzeichnet, daß** das Alkydharz vor der Oxidationsbehandlung ein gewichtsmittleres Molekulargewicht Mw von 10.000 bis 500.000 und vorzugsweise 20.000 bis 300.000, eine Säurezahl von höchstens 70, eine OH-Zahl von 20 bis 150 und eine mittlere Funktionalität f von 1,9 bis 2,1 aufweist.

**7.** Wäßrige Dispersion nach einem der Ansprüche 1 bis 6, **dadurch gekennzeichnet, daß** es sich bei der konjugierten ungesättigten Fettsäure um das Produkt der Isomerisierung von unter Linolsäure, Linolensäure, Sonnenblumenölfettsäure, Leinölfettsäure und Sojaölfettsäure ausgewählten ungesättigten Fettsäuren oder die Dehydratisierungsprodukte von Ricinusölfettsäure handelt.

**8.** Wäßrige Dispersion nach einem der Ansprüche 1 bis 7, **dadurch gekennzeichnet, daß** die Säurekomponente, aus der das Harz erhalten wird, neben der konjugierten ungesättigten Fettsäure außerdem auch noch mindestens eine andere nichtkonjugierte ungesättigte Fettsäure, mindestens eine gesättigte Fettsäure, mindestens eine Polycarbonsäure oder mindestens ein entsprechendes Anhydridderivat und mindestens eine Monocarbonsäure, bei der es sich nicht um eine Fettsäure handelt, enthält.

**9.** Wäßrige Dispersion nach einem der Ansprüche 1 bis 8, **dadurch gekennzeichnet, daß** es sich bei dem Oxidationsmittel um $H_2O_2$ in wäßriger Lösung in einer Konzentration von 15 bis 60 Gew.-% und vorzugsweise 25 bis 45 Gew.-%, bezogen auf die wäßrige Lösung, und in einer Menge von 0,05 bis 2 Gew.-%, bezogen auf das Alkydharz, handelt.

10. Wäßrige Dispersion nach einem der Ansprüche 1 bis 9, **dadurch gekennzeichnet, daß** die Oxidationsbehandlung nach der Bildung der wäßrigen Dispersion des Alkydharzes bei einer Behandlungstemperatur von weniger als 100°C und vorzugsweise 50 bis 90°C erfolgt.

11. Wäßrige Dispersion nach einem der Ansprüche 1 bis 10, **dadurch gekennzeichnet, daß** die Oxidationsbehandlung vor der Bildung der wäßrigen Dispersion des Alkydharzes bei einer Temperatur von 50 bis 150°C erfolgt.

12. Wäßrige Dispersion nach einem der Ansprüche 1 bis 11, **dadurch gekennzeichnet, daß** sie mindestens ein unter ionischen und/oder nichtionischen und/oder gemischten Tensiden ausgewähltes Tensid enthält.

13. Wäßrige Dispersion nach einem der Ansprüche 1 bis 12, **dadurch gekennzeichnet, daß** sie mindestens ein nichtionisches Tensid, gegebenenfalls in Kombination mit einem anionischen Tensid, in einem Gesamtgehalt von 5 bis 15 Gew.-% und vorzugsweise 7 bis 12 Gew.-%, bezogen auf das Alkydharz, und bei Vorliegen von anionischen Tensiden in einem Gewichtsverhältnis von ionischem Tensid zu nichtionischem Tensid von 25/75 bis 50/50 enthält.

14. Wäßrige Dispersion nach einem der Ansprüche 1 bis 13, **dadurch gekennzeichnet, daß** sie mindestens ein anderes Polymer oder mindestens ein anderes Harz enthält, welches nach der Bildung der Dispersion zugesetzt worden ist, wobei der Zusatz durch einfaches Mischen mit mindestens einer anderen Emulsion von Acryl- oder Styrol-Acryl- oder Vinylpolymer oder mit mindestens einer wäßrigen Dispersion von Polyurethan oder mindestens einem (Meth) acrylsäure-Copolymer oder mindestens einem Maleinsäureanhydrid-Copolymer, die teilweise mit Fettalkoholen, die trocknende Ungesättigtheiten enthalten können, verestert sein können, erfolgt.

15. Wäßrige Dispersion nach einem der Ansprüche 1 bis 14, **dadurch gekennzeichnet, daß** es sich um das Produkt des Mischens von mindestens zwei Dispersionen gemäß einem der Ansprüche 1 bis 14 oder mindestens einer Dispersion gemäß diesen Ansprüchen mit mindestens einer anderen Dispersion von unbehandeltem Alkydharz handelt.

16. Verfahren zur Herstellung einer wäßrigen Dispersion gemäß einem der Ansprüche 1 bis 15, **dadurch gekennzeichnet, daß** man mindestens:

a) mindestens ein Alkydharz mit einem Gehalt an konjugierter ungesättigter Fettsäure von mindestens 5 Gew.-%, bezogen auf das gesamte Alkydharz, vor und/oder während und/oder nach der Bildung der wäßrigen Dispersion einer Oxidationsbehandlung mit mindestens einem unter Hydroperoxiden einschließlich $H_2O_2$, Peroxiden und Singulett-Sauerstoff ausgewählten Oxidationsmittel unterwirft,
und zwar bei einer Temperatur im Bereich:

i) von Umgebungstemperatur bis weniger als 100°C und vorzugsweise von 50 bis 90°C, wenn die Oxidationsbehandlung nach der Bildung der wäßrigen Dispersion erfolgt, und
ii) von 50 bis 150°C, wenn die Oxidationsbehandlung vor der Bildung der wäßrigen Dispersion erfolgt,
iii) von 50 bis weniger als 100°C und vorzugsweise von 50 bis 90°C, wenn die Oxidationsbehandlung während der Bildung der wäßrigen Dispersion erfolgt,

b) vor, während oder nach der Oxidationsbehandlung eine wäßrige Dispersion des Alkydharzes bildet.

17. Verfahren nach Anspruch 16, **dadurch gekennzeichnet, daß** der Gehalt an konjugierter ungesättigter Fettsäure, bezogen auf das gesamte Alkydharz, mindestens 10 Gew.-% beträgt und das Oxidationsmittel unter Hydroperoxiden der allgemeinen Formel ROOH, worin R unter H, Alkylgruppen und Aralkylgruppen ausgewählt ist, ausgewählt wird und in einer Menge von 0,05 bis 5 Gew.-%, bezogen auf das gesamte Harz, verwendet wird.

18. Verfahren nach Anspruch 16 oder 17, **dadurch gekennzeichnet, daß** der Gehalt an konjugierter ungesättigter Fettsäure 10 bis 60 Gew.-% beträgt und der Gesamtgehalt an Fettsäure 30 bis 70 Gew.-%, bezogen auf das Harz, beträgt, wobei der Gewichtsanteil an konjugierter ungesättigter Fettsäure in bezug auf die gesamte Fettsäure 15 bis 85% beträgt.

19. Verfahren nach einem der Ansprüche 16 bis 18, **dadurch gekennzeichnet, daß** man die Oxidationsbehandlung mit einer wäßrigen Lösung von $H_2O_2$ mit 15 bis 60% und vorzugsweise 25 bis 45% $H_2O_2$ durchführt.

20. Verfahren nach einem der Ansprüche 16 bis 19, **dadurch gekennzeichnet, daß** man außerdem vor oder nach der Oxidationsbehandlung eine Neutralisation durchführt.

21. Verfahren nach einem der Ansprüche 16 bis 20, **dadurch gekennzeichnet, daß** man die wäßrige Dispersion des Alkydharzes nach zumindest teilweiser Neutralisation der Carboxylfunktionen des Alkydharzes bildet.

22. Verfahren nach einem der Ansprüche 16 bis 21, **dadurch gekennzeichnet, daß** man die Dispersion in Gegenwart mindestens eines unter ionischen und/oder nichtionischen und/oder gemischten Tensiden ausgewählten Tensids durchführt.

23. Verfahren nach Anspruch 22, **dadurch gekennzeichnet, daß** es sich bei dem Tensid um mindestens ein nichtionisches Tensid, gegebenenfalls in Kombination mit einem anionischen Tensid, in einem Gesamtgehalt von 5 bis 15 Gew.-% und vorzugsweise 7 bis 12 Gew.-%, bezogen auf das Alkydharz, und bei Vorliegen von anionischen Tensiden in einem Gewichtsverhältnis von ionischem Tensid zu nichtionischem Tensid von 25/75 bis 50/50 handelt.

24. Verfahren nach Anspruch 22 oder 23, **dadurch gekennzeichnet, daß** man das nichtionische Tensid unter ethoxylierten $C_{12}$-$C_{18}$-Fettalkoholen mit 2 bis 35 EO, ethoxylierten $C_{10}$-Isofettalkoholen mit 2-40 EO, ethoxylierten einfach verzweigten $C_{10}$-$C_{18}$-Fettalkoholen mit 2-40 EO, $C_{18}$-Sorbitolestern, ethoxylierten Sorbitolestern mit 5-20 EO-Einheiten oder ethoxylierten $C_{12}$-$C_{18}$-Fettsäuren mit 7-100 EO, ethoxyliertem Ricinusöl mit 30-40 EO, ethoxyliertem hydriertem Ricinusöl mit 7-60 EO, Fettsäureestern von Glycerylpalmitat, Glycerylstearat, Ethylenglykolstearat, Diethylenglykolstearat, Propylenglykolstearat, Polyethylenglykol-200-stearat oder ethoxyliertem $C_{18}$-Fettsäureester mit 2-15 EO auswählt.

25. Verfahren nach Anspruch 20, **dadurch gekennzeichnet, daß** man die Neutralisation mit einem unter Alkalimetallhydroxid, insbesondere LiOH, KOH, NaOH, oder Aminen, insbesondere Ammoniak, Triethylamin, Diethanolamin oder Aminomethylpropanol ausgewählten Neutralisationsmittel durchführt.

26. Verfahren nach einem der Ansprüche 16 bis 25, **dadurch gekennzeichnet, daß** man die Oxidationsbehandlung bei einer Temperatur von 50 bis 150°C vor der Bildung der wäßrigen Dispersion, vor einer Neutralisation und nach dem letzten Schritt der Herstellung des Alkydharzes durchführt.

27. Verfahren nach einem der Ansprüche 16 bis 25, **dadurch gekennzeichnet, daß** man die Oxidationsbehandlung bei einer Temperatur von weniger als 100°C und vorzugsweise 50 bis 90°C nach der Bildung der wäßrigen Dispersion und nach einer Neutralisation des Alkydharzes, die vor der Bildung der wäßrigen Dispersion erfolgt, durchführt.

28. Verfahren nach einem der Ansprüche 14 bis 25, **dadurch gekennzeichnet, daß** man die Bildung der wäßrigen Dispersion in Gegenwart eines Tensids nach einem Phasenumkehrverfahren und unter Verwendung einer mechanischen Dispergiervorrichtung oder einer Ultraschall-Beschallungsapparatur als Dispergiermittel durchgeführt.

29. Verfahren nach einem der Ansprüche 16 bis 28, **dadurch gekennzeichnet, daß** die Oxidationsbehandlung vor und nach, vor und während oder während und nach der Bildung der wäßrigen Dispersion erfolgt.

30. Verfahren nach einem der Ansprüche 16 bis 29, **dadurch gekennzeichnet, daß** es nach der Bildung der wäßrigen Dispersion als zusätzlichen Schritt ein einfaches Mischen mindestens einer wäßrigen Dispersion gemäß einem der Ansprüche 1 bis 13 oder mindestens einer nach dem Verfahren gemäß einem der Ansprüche 16 bis 29 erhaltenen wäßrigen Dispersion mit mindestens einer anderen wäßrigen Dispersion oder Emulsion von verträglichem Polymer oder Harz, ausgewählt unter Emulsionen mindestens eines Acryl- oder Styrol-Acryl- oder Vinylpolymers oder mindestens einer wäßrigen Dispersion von mindestens einem verträglichen Polyurethan oder mindestens einem (Meth)acrylsäure-Copolymer oder mindestens einem Maleinsäureanhydrid-Copolymer, wobei die Copolymere zumindest teilweise neutralisiert oder mit Fettalkoholen verestert sein können, wobei die Fettalkohle trocknende Ungesättigtheiten enthalten können, unter Rühren zur Homogenisierung umfaßt.

31. Verfahren nach einem der Ansprüche 16 bis 29, **dadurch gekennzeichnet, daß** es nach der Bildung der wäßrigen Dispersion als zusätzlichen Schritt ein einfaches Mischen von mindestens zwei Dispersionen gemäß einem der Ansprüche 1 bis 13 oder mindestens zwei nach dem Verfahren gemäß einem der Ansprüche 16 bis 30 erhaltenen wäßrigen Dispersionen oder mindestens einer Dispersion gemäß einem der Ansprüche 1 bis 13 mit mindestens einer anderen Dispersion von unbehandeltem Alkydharz umfaßt.

32. Wäßrige Dispersion mindestens eines Alkydharzes, die nach dem Verfahren gemäß einem der Ansprüche 16 bis 31 erhältlich ist.

33. Wäßrige Beschichtungszusammensetzung, die als Bindemittel mindestens eine wäßrige Dispersion gemäß einem der Ansprüche 1 bis 15 oder 32 oder eine nach dem Verfahren gemäß einem der Ansprüche 16 bis 31 erhaltene wäßrige Dispersion enthält.

34. Zusammensetzung nach Anspruch 33, **dadurch gekennzeichnet, daß** die Beschichtung unter dekorativen oder technischen wäßrigen Anstrichstoffen oder Lacken ausgewählt ist.

35. Zusammensetzung nach Anspruch 33 oder 34, **dadurch gekennzeichnet, daß** sie mindestens einen Trockenstoff in verringerter Menge oder vorzugsweise gar keinen Trockenstoff enthält.

36. Verwendung einer wäßrigen Dispersion nach einem der Ansprüche 1 bis 15 oder 32 oder einer nach dem Verfahren gemäß einem der Ansprüche 16 bis 31 erhaltenen wäßrigen Dispersion in dekorativen oder technischen wäßrigen Beschichtungen einschließlich Korrosionsschutzbeschichtungen für unter Holz, Metall, Kunststoff, Beton, Stuck, Keramik, Ziegelstein oder Verbundwerkstoff ausgewählte Substrate.

37. Mit mindestens einer der Beschichtungszusammensetzungen gemäß den Ansprüchen 33 bis 35 beschichtete Substrate.

## Claims

1. Aqueous dispersion comprising at least one alkyd resin, **characterized in that** the said alkyd resin is obtained from at least one conjugated unsaturated fatty acid representing, by weight, at least 5% of the said resin and **in that** the said resin is treated, before and/or during and/or after the forming of the aqueous dispersion, with at least one oxidizing agent selected from: hydroperoxides, including $H_2O_2$, peroxides or singlet oxygen, and **in that** the temperature of the oxidizing treatment is:

   i) from ambient temperature to less than 100°C, preferably from 50 to 90°C, when it takes place after the forming of the aqueous dispersion, and
   ii) from 50 to 150°C, when it takes place before the forming of the aqueous dispersion, and
   iii) from 50 to less than 100°C and preferably from 50 to 90°C, when the treatment takes place during the aqueous dispersion stage and **in that** the mean particle size is from 50 to 500 nm and that the solids content is from 30 to 70%.

2. Aqueous dispersion according to Claim 1, **characterized in that** the level of conjugated unsaturated fatty acid in the said resin is at least 10% by weight and **in that** the said oxidizing agent is selected from: hydroperoxides of general formula ROOH, with R chosen from H, alkyls or aralkyls, and with a level ranging from 0.05 to 5% by weight relative to the total of the said resin.

3. Aqueous dispersion according to either of Claims 1 and 2, **characterized in that** the level of conjugated unsaturated fatty acid is from 10 to 60% by weight and preferably from 15 to 50% and **in that** the total level of fatty acid is from 30 to 70% by weight relative to the said resin, with a level by weight of conjugated unsaturated fatty acid based on the total of the fatty acid varying from 15 to 85% and preferably from 25 to 70%.

4. Dispersion according to one of Claims 1 to 3, **characterized in that** the said hydroperoxide is chosen from: $H_2O_2$, cumyl hydroperoxide or t-butyl hydroperoxide, and preferably aqueous $H_2O_2$.

5. Dispersion according to one of Claims 1 to 4, **characterized in that** the said oxidizing treatment takes place in the absence of any drying agent.

6. Aqueous dispersion according to one of Claims 1 to 5, **characterized in that** the said alkyd resin, before the oxidizing treatment, has a weight-average molecular mass weight Mw ranging from 10 000 to 500 000 and preferably from 20 000 to 300 000 and an acid number not exceeding 70, an OH number ranging from 20 to 150 and a mean functionality f ranging from 1.9 to 2.1.

7. Aqueous dispersion according to one of Claims 1 to 6, **characterized in that** the said conjugated unsaturated fatty acid is the isomerization product of unsaturated fatty acids chosen from linoleic acid, linolenic acid, sunflower oil fatty acid, linseed oil fatty acid or soybean oil fatty acid or the dehydration products of castor oil fatty acid.

8. Aqueous dispersion according to one of Claims 1 to 7, **characterized in that** the acid component from which the said resin is obtained comprises, in addition to the conjugated unsaturated fatty acid, at least one other non-conjugated unsaturated fatty acid, at least one saturated fatty acid, at least one polycarboxylic acid or corresponding anhydride derivative, and at least one non-fatty monocarboxylic acid.

9. Aqueous dispersion according to one of Claims 1 to 8, **characterized in that** the oxidizing agent is $H_2O_2$ in aqueous solution at a concentration ranging from 15 to 60% and preferably 25 to 45% by weight with respect to the aqueous solution and at a level of 0.05 to 2% by weight relative to the said alkyd resin.

10. Aqueous dispersion according to one of Claims 1 to 9, **characterized in that** the oxidizing treatment takes place after the stage of forming the aqueous dispersion of the said alkyd resin, at a treatment temperature of less than 100°C and preferably from 50 to 90°C.

11. Aqueous dispersion according to one of Claims 1 to 10, **characterized in that** the oxidizing treatment takes place before the forming of the dispersion directly on the alkyd resin, at a temperature ranging from 50 to 150°C.

12. Aqueous dispersion according to one of Claims 1 to 11, **characterized in that** it comprises at least one surfactant selected from ionic surfactants and/or nonionic surfactants and/or mixed surfactants.

13. Aqueous dispersion according to one of Claims 1 to 12, **characterized in that** it comprises at least one nonionic surfactant, and optionally in combination with at least one anionic surfactant at an overall level by weight ranging from 5 to 15%, preferably from 7 to 12%, relative to the said alkyd resin, and if anionic surfactants are used with a ratio by weight of ionic to nonionic ranging from 25/75 to 50/50.

14. Aqueous dispersion according to one of Claims 1 to 13, **characterized in that** it additionally comprises at least one other polymer or at least one other resin added after the forming of the dispersion, the said addition being carried out by simple mixing with at least one other emulsion of acrylic or styrene-acrylic or vinyl polymer, or with at least one aqueous dispersion of polyurethane or with at least one (meth)acrylic acid copolymer or of at least one maleic anhydride copolymer which can be at least partially esterified by fatty alcohols which can comprise drying unsaturations.

15. Aqueous dispersion according to one of Claims 1 to 14, **characterized in that** it is a product of the mixing of at least two dispersions as defined according to one of Claims 1 to 14 or of at least one dispersion as defined according to these claims with at least one other dispersion of untreated alkyd resin.

16. Process for the preparation of an aqueous dispersion defined according to one of Claims 1 to 15, **characterized in that** it comprises at least the following stages:

   a) oxidizing treatment, before and/or during and/or after the stage of forming the dispersion, of at least one alkyd resin having a level by weight of conjugated unsaturated fatty acid of at least 5% relative to the amount of the alkyd resin, with at least one oxidizing agent selected from: hydroperoxides, including $H_2O_2$, peroxides or singlet oxygen,
   and at a temperature ranging:

      i) from ambient temperature to less than 100°C and preferably from 50 to 90°C, when the said oxidizing treatment takes place after the stage of forming the aqueous dispersion, and
      ii) from 50 to 150°C, when the said oxidizing treatment takes place before the stage of forming the aqueous dispersion, and
      iii) from 50 to less than 100°C and preferably from 50 to 90°C, when the oxidizing treatment takes place during the aqueous dispersion stage,

   b) aqueous dispersion of the said alkyd resin before or during or after the oxidizing treatment.

**17.** Process according to Claim 16, **characterized in that** the level by weight of conjugated unsaturated fatty acid relative to the amount of the said alkyd resin is at least 10% by weight and **in that** the said oxidizing agent is selected from: hydroperoxides of general formula ROOH, with R chosen from H, alkyls or aralkyls, and with a level by weight ranging from 0.05 to 5% relative to the amount of the said resin.

**18.** Process according to Claim 16 or Claim 17, **characterized in that** the level by weight of conjugated unsaturated fatty acid is from 10 to 60% and **in that** the total level by weight of fatty acid is from 30 to 70% relative to the said resin, with a level by weight of conjugated unsaturated fatty acid with regard to the fatty acid total varying from 15 to 85%.

**19.** Process according to one of Claims 16 to 18, **characterized in that** the said oxidizing treatment is carried out using an aqueous $H_2O_2$ solution comprising 15 to 60% and preferably comprising 25 to 45% of $H_2O_2$.

**20.** Process according to one of Claims 16 to 19, **characterized in that** it comprises an additional neutralization stage subsequent or prior to that of the oxidizing treatment.

**21.** Process according to one of Claims 16 to 20, **characterized in that** the aqueous dispersion of the alkyd resin is produced after at least partial neutralization of the carboxyl functional groups of the alkyd resin.

**22.** Process according to one of Claims 16 to 21, **characterized in that** the forming of the dispersion is carried out in the presence of at least one surfactant selected from ionic surfactants and/or nonionic surfactants and/or mixed surfactants.

**23.** Process according to Claim 22, **characterized in that** the surfactant is at least a nonionic surfactant, and possibly in combination with at least one anionic surfactant, at an overall level by weight ranging from 5 to 15%, preferably from 7 to 12% relative to the said alkyd resin, and if anionic surfactants are used with a ratio by weight of ionic to nonionic ranging from 25/75 to 50/50.

**24.** Process according to either of claims 22 and 23, **characterized in that** the said nonionic surfactant is selected from: ethoxylated $C_{12}$-$C_{18}$ fatty alcohols with 2 to 35 EO, ethoxylated iso-$C_{10}$ fatty alcohols with 2-40 EO, ethoxylated $C_{10}$-$C_{18}$ monobranched fatty alcohols with 2-40 EO, $C_{18}$ sorbitol esters, ethoxylated sorbitol esters with 5-20 EO units, or ethoxylated $C_{12}$-$C_{18}$ fatty acids with 7-100 EO, ethoxylated castor oil with 30-40 EO, ethoxylated hydrogenated castor oil with 7-60 EO, fatty esters of glyceryl palmitate, glyceryl stearate, ethylene glycol stearate, diethylene glycol stearate, propylene glycol stearate, polyethylene glycol 200 stearate or ethoxylated $C_{18}$ fatty ester with 2-15 EO.

**25.** Process according to Claim 20, **characterized in that** the neutralization stage is carried out with a neutralizing agent selected from: alkali metal hydroxide, more particularly LiOH, KOH or NaOH, or amines, more particularly ammonia, triethylamine, diethanolamine or aminomethylpropanol.

**26.** Process according to one of Claims 16 to 25, **characterized in that** the oxidizing treatment stage is carried out, at a temperature ranging from 50 to 150°C, before the stage of the forming of the aqueous dispersion and before a neutralization stage and after the final stage of preparation of the said alkyd resin.

**27.** Process according to one of Claims 16 to 25, **characterized in that** the oxidizing treatment stage is carried out, at a temperature ranging from ambient temperature to less than 100°C, preferably 50 to 90°C, after the forming of the aqueous dispersion and after a stage of neutralization of the alkyd resin which takes place before the stage of the forming of the aqueous dispersion.

**28.** Process according to one of Claims 14 to 25, **characterized in that** the stage of the forming of the aqueous dispersion is carried out in the presence of a surfactant and by a process of phase inversion and by using, as dispersion means, either a mechanical disperser or an ultrasound generator device.

**29.** Process according to one of Claims 16 to 28, **characterized in that** the oxidizing treatment stage takes place either before and after, or before and during, or during and after, or before and during and after the stage of forming the aqueous dispersion.

**30.** Process according to one of Claims 16 to 29, **characterized in that** it comprises, after the stage of forming the aqueous dispersion, an additional stage which is a simple mixing, with stirring, in order to homogenize at least one aqueous dispersion as defined according to one of Claims 1 to 13 or obtained by the process as defined in one of Claims 16 to 29 with at least one other aqueous dispersion or emulsion of polymer or of resin which is compatible chosen from the emulsions of at least one acrylic or styrene-acrylic or vinyl polymer or at least one aqueous dispersion of at least one compatible polyurethane or of at least one (meth)acrylic acid copolymer or of at least one maleic anhydride copolymer, it being possible for the said copolymers to be at least partially neutralized or esterified by fatty alcohols, which fatty alcohols can comprise drying unsaturations.

31. Process according to one of Claims 16 to 29, **characterized in that** it comprises, after the stage of the forming of the aqueous dispersion, an additional stage which is a simple mixing of at least two dispersions as defined in one of Claims 1 to 13 or obtained according to the process defined in one of Claims 16 to 30 or of at least one dispersion as defined according to Claims 1 to 13 with at least one other dispersion of untreated alkyd resin.

32. Aqueous dispersion of at least one alkyd resin which can be obtained according to the process as defined according to one of Claims 16 to 31.

33. Aqueous coating composition comprising, as binder, at least one aqueous dispersion as defined according to one of Claims 1 to 15 or 32 or as obtained according to the process defined according to one of Claims 16 to 31.

34. Composition according to Claim 33, **characterized in that** the said coating is selected from: decorative or industrial aqueous paints or varnishes.

35. Composition according to either of Claims 33 and 34, **characterized in that** it comprises at least one drying agent at a reduced level or, preferably, **in that** it does not comprise any drying agent.

36. Use of an aqueous dispersion according to one of Claims 1 to 15 or 32 or as obtained according to the process of one of Claims 16 to 31 in decorative or industrial aqueous coatings, including corrosion-resistant coatings, for substrates selected from: wood, metal, plastic, concrete, plaster, ceramic, brick or composite.

37. Substrates coated with at least one of the coating compositions as defined according to Claims 33 to 35.